# FASCICULE DE BREVET EUROPEEN

(11) **EP 0 620 623 B1**
(45) Date de publication et mention de la délivrance du brevet: **21.01.1998**
(21) Numéro de dépôt: 94410020.5
(22) Date de dépôt: 06.04.1994
(51) Int. Cl.: H02B 1/06, H02B 1/044

(54) **Enjoliveur pour une ouverture d'armoire électrique**
Zierabdeckung für die Öffnung eines Schaltschranks
Decorative cover for an electrical cabinet aperture

(30) Priorité: 16.04.1993 FR 9304855
(43) Date de publication de la demande: 19.10.1994
(73) Titulaire: SCHNEIDER ELECTRIC SA, 92100 Boulogne Billancourt (FR)
(72) Inventeur: Perriere, Alain, F-38050 Grenoble Cedex 09 (FR)
(74) Mandataire: Hecké, Gérard

(56) Documents cités:
- DE-B- 1 257 446
- DE-U- 8 433 340
- GB-A- 855 885

## Description

La présente invention concerne un enjoliveur pour une ouverture découpée dans une porte d'armoire électrique contenant au moins un appareil électrique pourvu d'un organe de commande accessible à travers ladite ouverture, cet enjoliveur comprenant un cadre prévu pour entourer ladite ouverture, et des moyens de fixation intégrés de ce cadre, et comportant au moins deux vis coopérant avec au moins deux écrous, chaque écrou étant pourvu d'une patte d'assemblage agencée pour occuper une première position de repos, et une seconde position de fixation.

Un tel enjoliveur est décrit dans le document GB-A-855885, dans lequel le passage de l'une des positions vers l'autre s'opère par une rotation d'un demi-tour, durant laquelle la patte d'assemblage reste en saillie dans un même plan. Un ressort de compression est enfilé sur la vis, entre l'écrou et la paroi interne de la cadre. Ce dispositif n'autorise pas un positionnement précis ni un verrouillage correct de la patte d'assemblage.

Il existe d'autres enjoliveurs fixés au moyen de vis et d'écrous spéciaux qui doivent être engagés dans des trous appropriés ménagés dans la porte de l'armoire électrique, de part et d'autre de l'ouverture permettant l'accès à l'organe de commande d'un appareil électrique. Ces trous doivent de ce fait avoir des positions très précises, ce qui impose leur réalisation en usine. Actuellement, le plastron ou porte d'une armoire électrique est découpé en usine pour réaliser à la fois les ouvertures adaptées aux enjoliveurs et les trous de passage des vis de fixation.

Le but de l'invention consiste à supprimer les inconvénients précités.

L'enjoliveur selon l'invention est caractérisé en ce que :
- les écrous sont logés dans des cavités ménagées dans l'épaisseur dudit cadre, et comportent chacun deux ailettes latérales agencées pour prendre appui sur des butées disposées sur les parois de ladite cavité lorsque les pattes d'assemblage occupent la première position de repos dans laquelle elles sont intégrées dans le cadre, et pour s'engager dans des dégagements lorsque les pattes d'assemblage occupent la seconde position de fixation dans laquelle elles sont protubérantes vers l'extérieur du cadre,
- les dégagements sont ménagés dans les parois du cadre délimitant la cavité correspondante,
- une encoche est agencée dans le cadre pour recevoir la patte d'assemblage de chaque écrou lorsqu'elle se trouve dans la seconde position de fixation, le passage de la première position de repos vers la deuxième position de fixation étant obtenu par un mouvement de rotation d'un quart de tour, après une poussée dudit écrou vers la face arrière de cadre.

La présente invention et ses principaux avantages sera mieux comprise en référence à la description d'exemples de réalisation préférés et aux dessins annexés dans lesquels :
La figure 1 représente une vue en perspective éclatée représentant deux enjoliveurs et les moyens de fixation associés correspondant à l'art antérieur connu,
les figures 2A et 2B représentent une vue en coupe illustrant un enjoliveur selon l'invention,
les figures 3A, 3B, 3C et 3D représentent l'enjoliveur selon les figures 2A et 2B, lorsque les moyens de fixation occupent ladite première position de repos,
les figures 4A, 4B, 4C et 4D représentent l'enjoliveur selon les figures précédentes, lorsque les moyens de fixation occupent ladite seconde position de fixation,
la figure 5 représente une vue en perspective de la face arrière du cadre de l'enjoliveur des figures précédentes,
la figure 6 représente une vue en perspective de dessus d'un écrou de fixation,
la figure 7 représente une vue en perspective de dessous de l'écrou de fixation selon la figure 6, et
les figures 8A et 8B représentent deux vues respectivement de dessous et en coupe d'une variante de réalisation de l'enjoliveur selon l'invention.

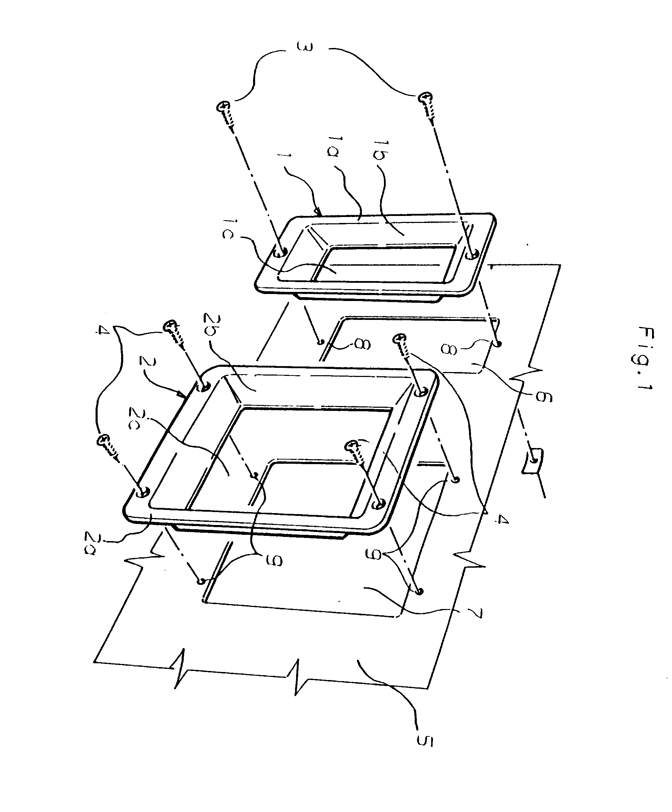

En référence à la figure 1, les enjoliveurs 1 et 2 représentés sont constitués d'un cadre rectangulaire ou carré pourvu d'un rebord plan 1a, 2a prolongeant des facettes inclinées 1b, 2b qui définissent une ouverture centrale 1c, 2c. Ces cadres sont destinés à être fixés par des vis 3, 4 à une porte d'armoire électrique, ou plastron 5. A cet effet, des ouvertures 6 et 7 ont été découpées dans le plastron pour permettre l'accès à un organe de commande d'un appareil électrique tel que par exemple un disjoncteur (non représenté). Des trous 8, 9 de préférence filetés ont été percés dans le plastron pour permettre l'insertion des vis correspondantes. Dans le cas où les trous ne sont pas filetés, il est prévu de placer un écrou sur la vis pour assurer la fixation de l'enjoliveur. Il est évident que la position de ces trous doit être extrêmement précise et qu'ils doivent par conséquent être réalisés en usine. Bien que les ouvertures 6 et 7 pourraient être réalisées avec moins de précision puisque leurs bords sont finalement masqués par les facettes inclinées et les rebords plans des cadres, elles sont également découpées en usine parce que leur position relative par rapport aux trous recevant les vis doit également être précise.

Dans la pratique, ces enjoliveurs étaient livrés sous la forme d'un ensemble comprenant le cadre et les vis contenues dans un sachet accompagnant le cadre. Les plastrons étaient préparés en usine, ce qui peut constituer une gêne et un inconvénient pour l'utilisateur, notamment lorsque des modifications sont à apporter en cours de montage des armoires électriques ou lors de transformations ultérieures.

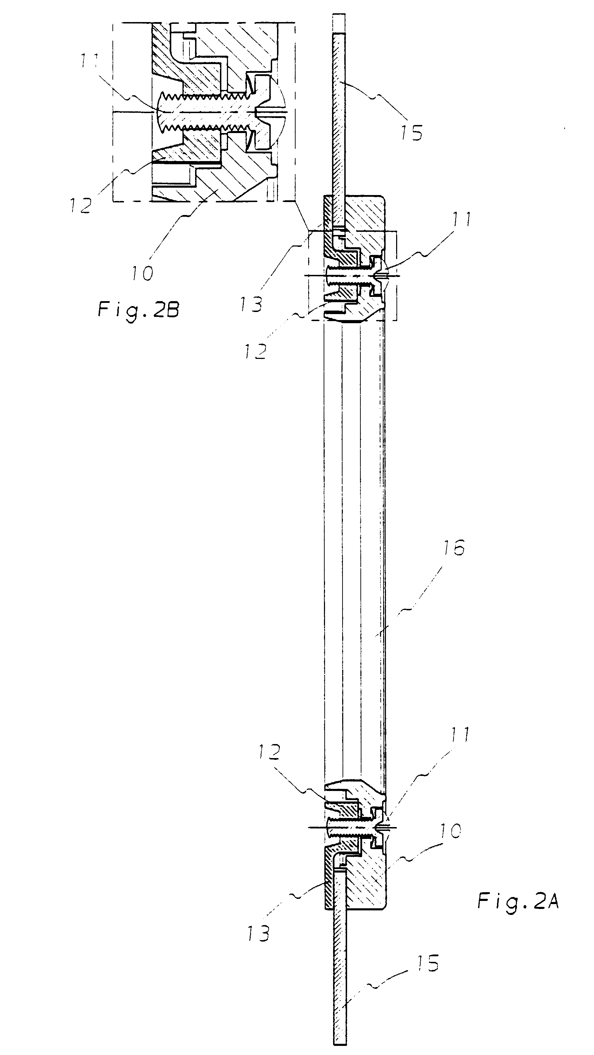

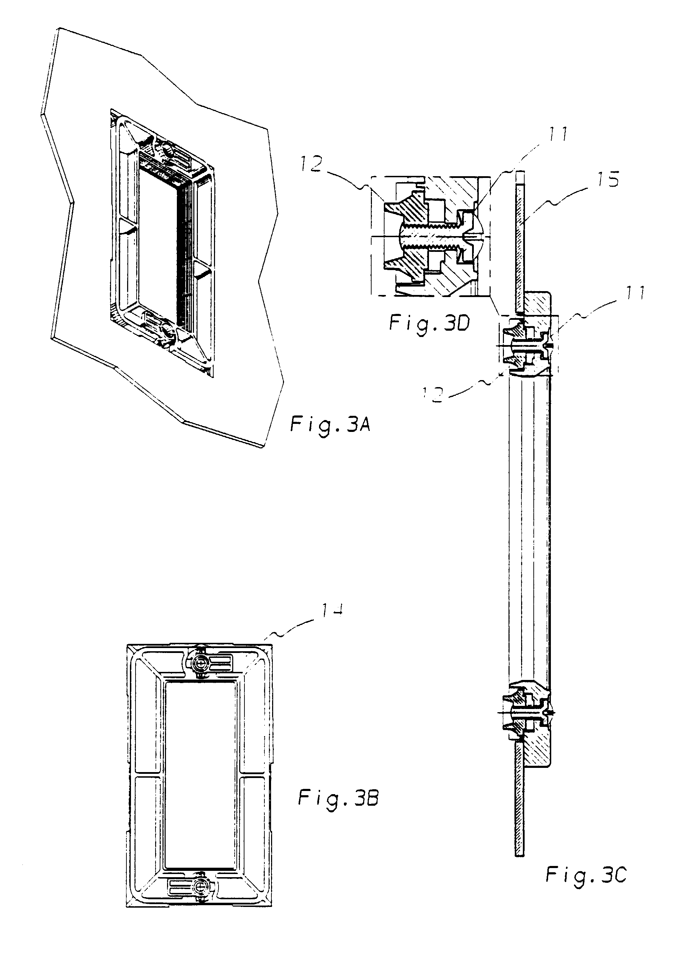

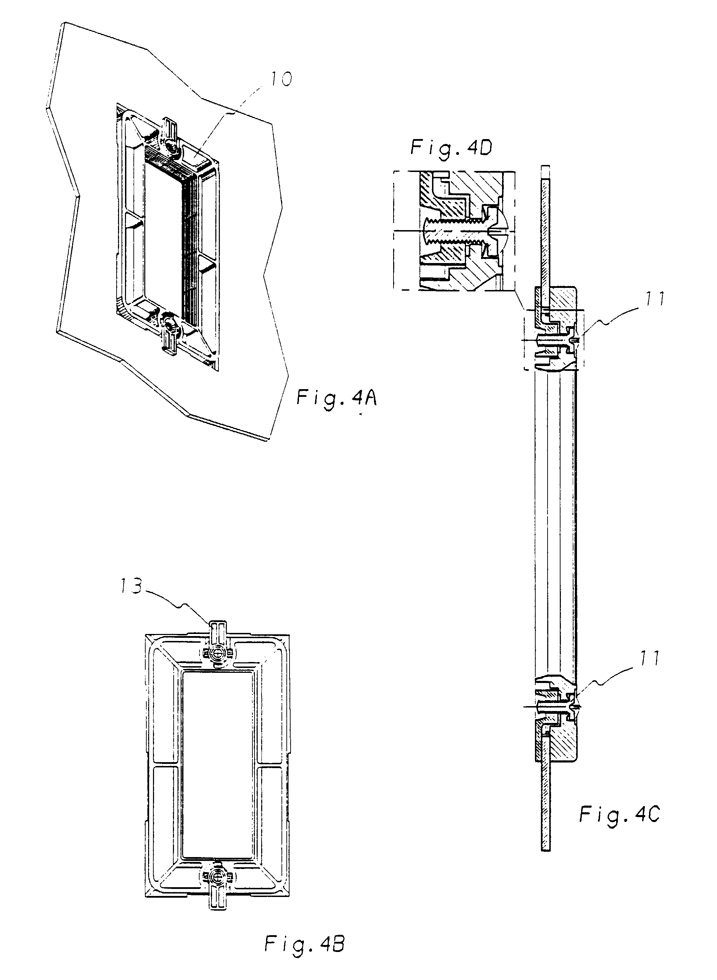

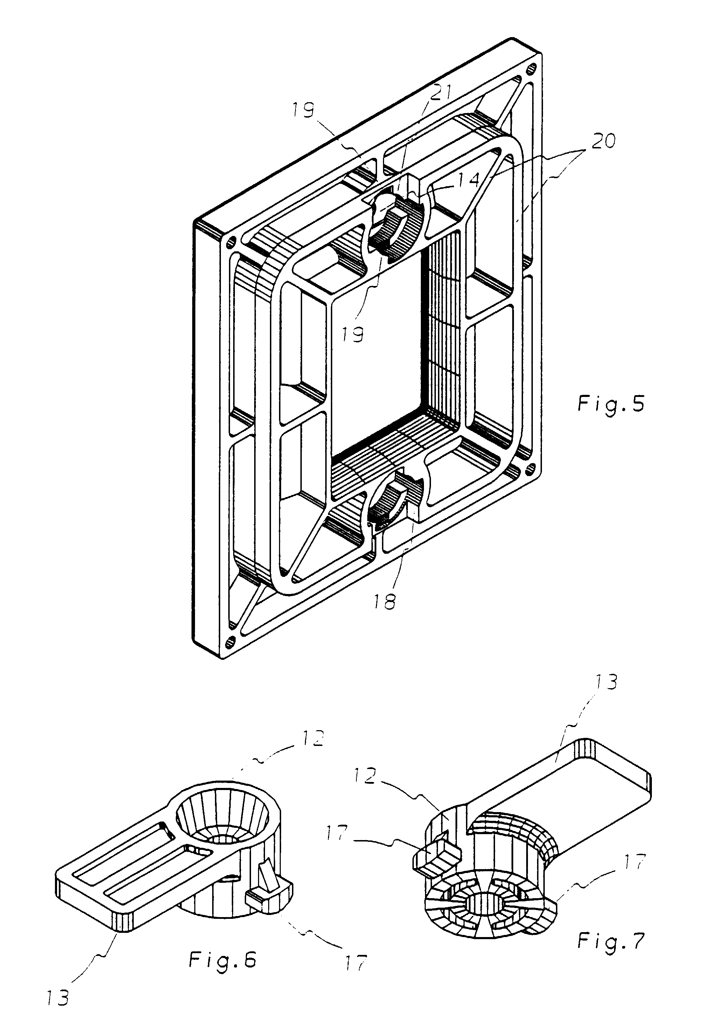

Les figures 2 à 7 illustrent une première forme de réalisation avantageuse de l'enjoliveur selon l'invention. Il se compose d'un cadre 10 et de moyens de fixation intégrés comprenant au moins deux vis 11 et deux écrous correspondants 12. Ces écrous sont pourvus chacun d'une patte d'assemblage 13 agencée pour occuper une première position de repos (voir figures 3A, 3B, 3C et 3D) et une seconde position de fixation (voir figures 2A, 2B, 4A, 4B, 4C, 4D). Dans ladite première position l'écrou portant la patte d'assemblage 13 est logé dans une cavité 14 ménagée dans l'épaisseur du cadre. La patte est orientée dans la direction du côté du cadre dans lequel est disposée la vis correspondante. Elle est en fait intégrée à ce cadre. Dans ladite seconde position, la patte d'assemblage 13 a été tournée d'un quart de tour par rapport à la position précédente. A cet effet, l'écrou 12 a été poussé vers la face arrière du cadre pour permettre à la patte de tourner librement. Dans cette position la patte est orientée perpendiculairement au côté du cadre dans lequel est disposée la vis correspondante et elle dépasse ce cadre pour se positionner contre la face arrière du plastron 15 et pour assurer le maintien du cadre en position dans l'ouverture ménagée dans ce plastron.

Comme le montre la figure 2A, le cadre 10 est en appui contre la face frontale du plastron 15 en entourant l'ouverture 16 ménagée dans ce plastron. Les pattes 13 solidaires des écrous 12 ont été tournées d'un quart de tour par rapport à la position de repos dans laquelle l'enjoliveur a été mis en position, de sorte que ces pattes dépassent le bord de l'ouverture 16. Le serrage du plastron entre le cadre d'une part et les pattes d'assemblage d'autre part s'obtient par rotation des vis 11 par rapport aux écrous correspondants 12.

Selon une forme de réalisation préférée ces vis sont autotaraudeuses.

Pour que les opérations de mise en place soient facilitées, les écrous 12 sont conçus pour occuper des positions nettement définies. Dans ce but ils comportent des ailettes latérales 17 agencées pour coopérer avec des dégagements latéraux 18 ménagés dans les parois délimitant la cavité 14. Dans la position de repos, lorsque la patte d'assemblage est parallèle au côté du cadre qui porte l'écrou et la vis correspondante, les ailettes 17 sont en appui sur des butées 19 disposées sur les parois de la cavité 14. De cette manière, l'écrou n'est pas totalement inséré dans la cavité et la patte 13 est en appui sur la structure intérieure 20 du cadre.

Lorsque cet écrou est tourné d'un quart de tour de manière à faire dépasser la patte d'assemblage correspondante vers l'extérieur du cadre les deux ailettes 17 pénètrent dans les dégagements 18 et la patte pénètre dans une encoche 21 ménagée dans ladite structure intérieure 20.

La rotation de la vis par rapport à l'écrou tire ce dernier axialement vers la face frontale du cadre de l'enjoliveur et fait pénétrer la patte d'assemblage dans l'encoche correspondante 21. De ce fait un pivotement accidentel de cette patte est rendu impossible. Le blocage de la vis dans l'écrou assure le serrage du plastron entre le cadre et la patte d'assemblage et par conséquent une fixation stable et sûre de l'enjoliveur dans l'ouverture ménagée dans ce plastron.

Cette opération est réversible et il suffit de dévisser les vis et de tourner les pattes de fixation d'un quart de tour pour dégager l'enjoliveur.

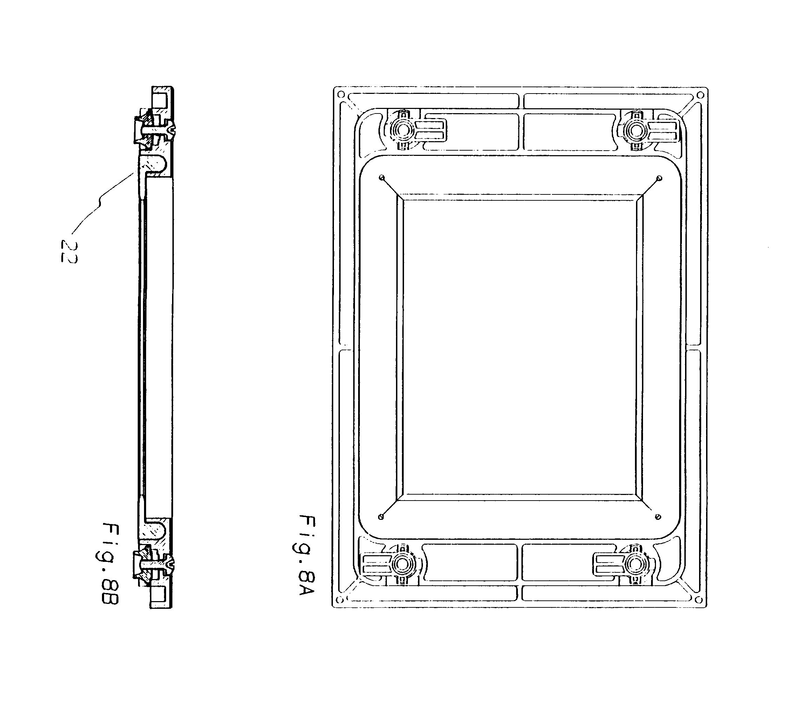

Les figures 8A et 8B illustrent une variante de réalisation dans laquelle le cadre est équipé d'un joint d'étanchéité 22 engagé de force ou collé dans une gorge périphérique ménagée dans sa face intérieure, c'est-à-dire sur la face qui est destinée à prendre appui contre le plastron. Ce joint entoure l'ouverture de ce plastron et garantit une fixation étanche de l'enjoliveur contre le plastron autour de l'ouverture correspondante.

## Revendications

1. Enjoliveur pour une ouverture (16) découpée dans une porte (15) d'armoire électrique contenant au moins un appareil électrique pourvu d'un organe de commande accessible à travers ladite ouverture, cet enjoliveur comprenant un cadre (10) prévu pour entourer ladite ouverture, et des moyens de fixation intégrés de ce cadre, et comportant au moins deux vis (11) coopérant avec au moins deux écrous (12), chaque écrou étant pourvu d'une patte d'assemblage (13) agencée pour occuper une première position de repos, et une seconde position de fixation,
caractérisé en ce que
- les écrous (12) sont logés dans des cavités (14) ménagées dans l'épaisseur dudit cadre (10), et comportent chacun deux ailettes latérales (17) agencées pour prendre appui sur des butées (19) disposées sur les parois de ladite cavité (14) lorsque les pattes d'assemblage (13) occupent la première position de repos dans laquelle elles sont intégrées dans le cadre (10), et pour s'engager dans des dégagements (18) lorsque les pattes d'assemblage (13) occupent la seconde position de fixation dans laquelle elles sont protubérantes vers l'extérieur du cadre (10),
- les dégagements (18) sont ménagés dans les parois du cadre délimitant la cavité (14) correspondante,
- une encoche (21) est agencée dans le cadre (10) pour recevoir la patte d'assemblage (13) de chaque écrou lorsqu'elle se trouve dans la seconde position de fixation, le passage de la première position de repos vers la deuxième position de fixation étant obtenu par un mouvement de rotation d'un quart de tour, après une poussée dudit écrou vers la face arrière de cadre (10).

2. Enjoliveur selon la revendication 1, caractérisé en ce que ledit cadre (10) comporte un évidement dans lequel est logé un joint d'étanchéité (22) disposé dans la face intérieure de ce cadre et entourant son ouverture centrale.

## Patentansprüche

1. Einbaublende für einen Ausschnitt (16) in einer Schaltschranktür (15), in die mindestens ein Schaltgerät mit einem, durch den genannten Ausschnitt hindurch zugänglichen Antriebsorgan eingesetzt ist, wobei diese Einbaublende einen Rahmen (10) zur Umschließung des genannten Ausschnitts sowie Befestigungsmittel umfaßt, die in diesen Rahmen integriert sind und mindestens zwei, mit mindestens zwei Muttern (12) zusammenwirkende Schrauben (11) umfassen, und jede Mutter eine Befestigungslasche (13) aufweist, die dazu dient, eine erste Ruhestellung sowie eine zweite Befestigungsstellung einzunehmen, dadurch gekennzeichnet, daß
- die Muttern (12) in, in der Materialdicke des genannten Rahmens (10) ausgebildeten Ausnehmungen (14) angeordnet sind und jeweils zwei seitliche Flügel (17) aufweisen, die dazu dienen, sich auf, an den Wandungen der genannten Ausnehmung (14) ausgebildeten Vorsprüngen (19) abzustützen, wenn die Befestigungslaschen (13) die erste Ruhestellung einnehmen, in der sie in den Rahmen (10) integriert sind, sowie in Aussparungen (18) einzugreifen, wenn die Befestigungslaschen (13) die zweite Befestigungsstellung einnehmen, in der sie nach außen aus dem Rahmen (10) hervorstehen,
- die Aussparungen (18) in den, die jeweilige Ausnehmung (14) begrenzenden Wandungen des Rahmens ausgebildet sind,
- eine Vertiefung (21) im Rahmen (10) ausgebildet ist, um die Befestigungslasche (13) jeder Mutter aufzunehmen, wenn sich diese in der zweiten Befestigungsstellung befindet, wobei der Übergang von der ersten Ruhestellung in die zweite Befestigungsstellung durch Vierteldrehung der genannten Mutter nach ihrem Herunterdrücken in Richtung der Rückseite des Rahmens (10) bewirkt wird.

2. Einbaublende nach Anspruch 1, dadurch gekennzeichnet, daß der genannte Rahmen (10) eine Aussparung aufweist, in die eine Dichtung (22) eingesetzt ist, die an der Innenseite dieses Rahmens angeordnet und um dessen Mittelausschnitt herumgeführt ist.

## Claims

1. An embellishing cover for an opening (16) cut out in a door (15) of an electrical cabinet containing at least one electrical apparatus provided with an operating part accessible via said opening, this embellishing cover comprising a frame (10) designed to surround said opening, and built-in means for fixing this frame, and comprising at least two screws (11) cooperating with at least two nuts (12), each nut being provided with an assembly lug (13) arranged to occupy a first rest position and a second fixing position,
characterized in that
- the nuts (12) are housed in cavities (14) arranged in the thickness of said frame (10) and each comprise two lateral wings (17) arranged to bear on stops (19) disposed on the walls of said cavity (14) when the assembly lugs (13) occupy the first rest position in which they are integrated in the frame (10), and to engage in recesses (18) when the assembly lugs (13) occupy the second fixing position in which they are protruding outwards from the frame (10),
- the recesses (18) are arranged in the walls of the frame bounding the corresponding cavity (14),
- a notch (21) is arranged in the frame (10) to receive the assembly lug (13) of each nut when it is in the second fixing position, moving from the first rest position to the second fixing position being achieved by a rotation movement one quarter of a turn after said nut has been pushed towards the rear face of the frame (10).

2. The embellishing cover according to claim 1, characterized in that said frame (10) comprises a recess in which a seal (22) is housed disposed on the internal face of this frame and surrounding its central opening.
